# EUROPEAN PATENT APPLICATION

(11) **EP 0 719 003 A2**
(43) Date of publication of application: **26.06.1996**
(21) Application number: 95118097.5
(22) Date of filing: 17.11.1995
(51) Int. Cl.: H04L 5/06

(54) **Frequency hopped cellular mobile radio system combining OFDM and frequency hopping**

(30) Priority: 22.12.1994 GB 9425962
(71) Applicant: ROKE MANOR RESEARCH LIMITED, Romsey, Hampshire, SO51 0ZN (GB)
(72) Inventor: Hulbert, Anthony Peter, Southampton, SO15 5AN (GB)
(74) Representative: Allen, Derek

(57) **Abstract**

CDMA cellular mobile radio using frequency hopping has been shown to yield very high spectral efficiencies. Known systems involve long interleaving delays to obtain adequate interferer diversity. This invention involves the use of faster frequency hopping (a few bits per hop) to achieve good interferer diversity without the need for long delays. The use of DBPSK along with a QPSK element to randomise interference achieves good performance. Error correction coding is applied with interleaving to average over the different interferer. Orthogonal frequency division multiple access provides for higher spectral efficiency and provides very simple implementation.

## Description

The present invention relates to frequency hopped cellular mobile radio systems, and in particular system using orthogonal frequency division multiplex techniques.

In patent number 2239768B there is discussed a cellular mobile radio system based on moderately fast slow frequency hopping. In order to obtain a high order of interferer diversity with short delay, the system used a short hop duration consisting of only several transmitted bits per hop. Nyquist filtering is used to provide spectral shaping of the transmitted signal for each hop. The transmission time on each frequency had to be extended beyond the nominal 'dwell time' on that frequency because of the long impulse response of the transmit (and receiver) filter. This led to the need for three filters and numerically controlled oscillators in both the transmitter and receiver. The guard band required between frequencies (determined by the shape factor of the filter) led to reduced spectral efficiency and the pulse shaping itself led to a moderately high peak to mean ratio on the transmitter, increasing cost and power consumption.

It is an aim of the present invention to obtain the advantages of the system described above whilst eliminating the disadvantages.

An embodiment of the present invention will now be described with reference to the accompanying drawings, wherein,
FIGURE 1 shows an example of a framed structure,
FIGURE 2 shows a block diagram of a mobile terminal, and,
FIGURE 3 shows a block diagram of a base station.

According to the present invention there is provided a frequency hopped cellular mobile radio system comprising at least one base station and a plurality of terminals, each terminal being arranged to communicate with said base station over a radio medium, wherein the terminals are arranged to operate using orthogonal frequency division multiple access techniques, in which the terminals transmit orthogonally on a number of different frequencies, so that one or more data streams are multiplexed onto orthogonal frequencies.

According to an aspect of the present invention the orthogonal frequencies have a uniform frequency spacing f_{c} and linear signalling is applied at the rate of 1/f_{c}.

According to a further aspect of the present invention the system is arranged to utilise synchronised orthogonal slow frequency hopping with orthogonal frequency division multiple access, so that each terminal alters its transmit frequency from one frequency to another, which in the case of an uplink cellular mobile radio system, fully orthogonal transmission is achieved.

The orthogonal frequency division multiplex technique is a broadcast technique, wherein one or more data streams are multiplexed onto a number, (generally large) of orthogonal frequencies (tones). In this case orthogonal means that the tones have a uniform frequency spacing f_{c} and that linear signalling is applied at the rate 1/f_{c}. When coupled with matched filter reception, in this case integrate and dump, this has the effect that the reception of any particular tone is unaffected by the energy on any of the other tone frequencies.

For any given tone, its spectrum relative to its signalling bandwidth is very wide. However, when a block of tones consisting of a contiguous set of frequencies are considered together the rate of roll off relative to the total occupied bandwidth is acceptable.

One aspect of this invention is the use of orthogonal frequency division multiple access, in which a number of terminals transmit orthogonally on a number of different frequencies. Maintaining orthogonality requires tight synchronisation (to a fraction of a symbol) of the transmit times of the different terminals. However, once achieved, this leads to a very simple implementation of the transmitter based on a single direct digital synthesiser. The modulation format requires no filtering for pulse shaping and there is no overlapping between frequencies. Moreover, the transmit signal has unity peak to mean ratio. Also since the signalling rate equals the frequency spacing, there is no guard band.

Another aspect of the invention is to combine synchronised orthogonal slow frequency hopping with orthogonal frequency division multiple access. Thus, each terminal, from time to time, alters its transmit frequency from one tone to another. The use of direct digital synthesiser technology allows this switching to take place essentially instantaneously (within one sample of the direct digital synthesis) so that orthogonality of waveforms is maintained. By using orthogonal hopping sequences the waveforms are doubly orthogonal, permitting, in the case of the uplink of a cellular mobile radio system, fully orthogonal transmission.

Although some non orthogonality will arise through multipath propagation, the relatively low signalling rate on each tone should render this effect fairly small, much smaller than in for example orthogonal direct sequence spreading.

A third aspect of this invention is to combine the new techniques with aspects from the above mentioned patent number 2239768B. Thus, mobiles are affiliated to their nearest (in the radio sense) base station and have their power controlled to the minimum necessary to achieve adequate bit error rate performance. It is not necessary to control the power at a rate sufficient to track fading. Indeed this is not possible since (it is assumed that) the fading conditions are independent from one frequency hop to the next. Feedback timing control is exerted on the mobiles' transmissions in a manner familiar to those versed in the art so as to cause all transmissions as received at the base station to be in hop and bit synchronisation. This is necessary to achieve true orthogonality. Every base station uses a frequency hop set of N frequencies. In general this will be a contiguous set although this is not essential. Up to N mobiles may be affiliated simultaneously to each base station. The N frequencies are hopped around the mobile in a manner familiar to those versed in the art. One possible approach would be to take the set of N frequencies and to randomly scramble their order prior to mapping the mobiles onto the frequencies. Two options then follow.

All the mobiles may cycle around these N frequencies and then perform a new scrambling function N hops later. This has the advantage that every mobile will visit every frequency in N hops thereby maximising interferer diversity. It has the disadvantage that, within a frame of N hops, each mobile follows the same other mobile. If that mobile, because of its location, has particular severe multipath conditions then some orthogonality may be lost. This intra cell interference will apply throughout the frame for the pair of mobiles.

A new random scrambling may be performed of all frequencies for every new hop. This has the disadvantage that the hopping for any given mobile is truly random so that it cannot be guaranteed that all frequencies are visited within a frame. This will, to some extent, degrade the order of interferer diversity. However, whilst remaining orthogonal within the cell, it is completely random which mobile will follow which so that freak temporary conditions of partial non orthogonality will be averaged over all users.

Of course other means of frequency hopping are possible. The mobiles in all cells hop in a similar fashion. Although orthogonality is preserved within a cell (i.e. there is little or no intra cell interference) there is no orthogonality between cells (there is inter cell interference).

The hop dwells are brief, and therefore there is no room for inclusion of a time multiplexed pilot transmission, training sequence, or synchronisation sequence. Accordingly, differential modulation only can be used. The basic modulation is either DPSK (differential phase shift keying) or DQPSK or DPSK with QPSK randomisation overlaid although higher level modulation formats could be considered.

A further aspect of the invention is that the effect of poor signal conditions are averaged over the cases of good signal conditions to provide an overall performance which is acceptable. There are several approaches available, based on forward error correction coding (FEC).

Convolutional codes may be used with an interleaving strategy which spreads out the bits from poor hops amongst good ones. This has the advantage that soft decision information may easily be incorporated, using a Viterbi decoder.

Reed Solomon codes may be used; for the burst size available it is quite practical to code all of the bits in a single hop into a single Reed Solomon symbol. In this way burst errors corresponding to single hops may easily be corrected. Generalised minimum distance (GMD) decoding may be applied to incorporate soft information.

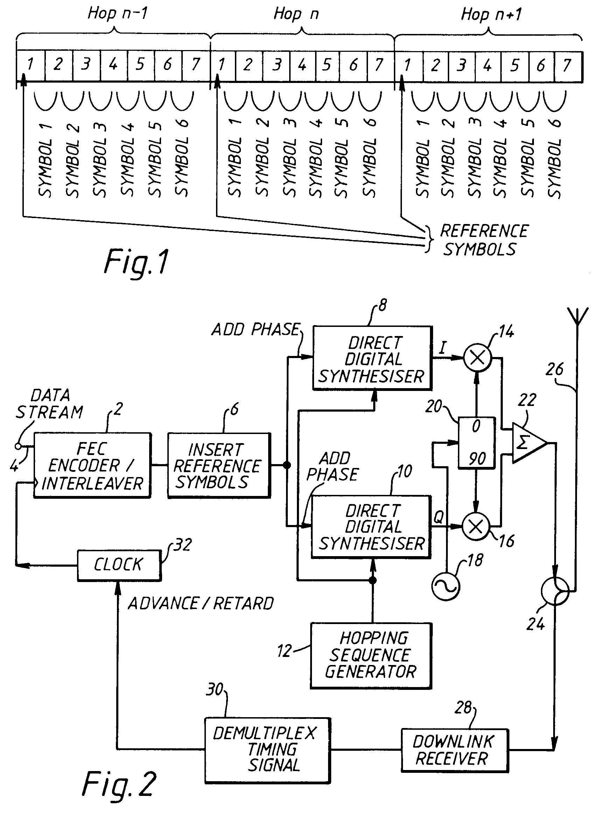

In an exemplary system, the symbol dwell duration is 31.25 µsecs, the hop dwell is 218.75 µsecs and the number of symbols per hop is six. DQPSK is used to provide two symbols per bit. The frame structure is illustrated in Figure 1.

A Reed Solomon code is used with constraint length symbol size six (two symbols per hop) and sixty-three symbols per code word (rounded up to sixty-four). Twenty-five out of every code word are redundant. Thus, the throughput is over the data which is interleaved over thirty-two hops corresponding to a frame size of 7 ms. This leads to a bit rate to the user of 33.4 kbps. The number of simultaneous users will depend upon the inter cell interference. This approach will lead to a higher level of spectral efficiency than existing approaches.

With reference to Figure 2, the mobile terminal comprises forward error code (FEC) encoder/interleaver 2, which receives a data stream on line 4. The encoder/interleaver 2 is connected to a circuit 6 arranged to insert reference symbols, the output of which is connected to an input of two direct digital synthesisers 8, 10. The synthesisers are also connected to a hopping sequence generator 12. The synthesiser 8 handles the inphase signals, and the digital synthesiser 10 handled the quadrature phase signals. An output from each synthesiser is connected to an input of a combiner 14, 16 respectively, each of which at a second input, receives an inphase and quadrature phase signal from the carrier frequency synthesiser 18 via the circuit 20. The outputs from the combiner 14, 16 are applied to a summator 22, the output of which is applied to a diplexer 24, which is connected to an antenna 26 and also to a downlink receiver 28. The downlink receiver 28 is connected to a demultiplex timing signal generator 30, the output of which is applied to a clock circuit 32, which is used to provide an advance/retard clock signal which is applied to the encoder/interleaver circuit 2.

The data stream for transmission is first FEC encoded (this may or may not include interleaving) by circuit 2. Reference symbols are inserted at the start of each frequency hopping frame by the circuit 6. These are simply symbols of fixed phase against which the first symbol in the hop dwell may be differentially encoded. The simplest operation (and the one which yields the best spectral characteristics) is to insert zeros into the stream. This leads to phase continuity either side of the frequency hop. The output from the circuit 6 is applied to a pair of direct digital synthesisers 8, 10 arranged to provide inphase and quadrature phase signals, which are applied to the combiners 14, 16 respectively. In the case of binary phase modulation, this may be accomplished by a mixer at the output of the synthesisers. In the case of m-ary phase modulation, the modulation can be achieved by inserting an adder into the phase accumulator of the synthesisers. It will be appreciated that addition of phase at this place automatically implements differential modulation. The output of the pair of direct digital synthesisers (or equivalently, single quadrature DDS) is then up-converted to the transmission frequency. It will be appreciated that the generation of the frequency hopped transmit signal may be accomplished in a number of equivalent fashions. For example, a single DDS may be used to generate the frequency hopped signal at an IF and subsequently up-converted (via one or more stages) to the final frequency. Moreover, other methods of generation of the basic frequency hopped signal are not excluded although the approach described above is likely to be the most cost effective. The signal is transmitted to the receiving station, either on a unique transmitting antenna or via a shared transmit/receive antenna 26, using a diplexer circuit 24.

A transmission in the opposite direction (i.e. to the terminal) is assumed. In general, this may include data traffic intended for the terminal. However, the point of interest is a transmission of timing information which enables the terminal to synchronise its transmissions to the timings of other signals received at the base station. No assumptions are made about the format or modulation of the transmission(s) from the base station to the terminal. However, it is assumed that the transmission will include some information specifically intended for the base station in question to control the mobile's transmission timing. This information is obtained from the combination of the downlink receiver 28 and the unit demultiplexer timing signal generated by circuit 30.

In Figure 2, the control signal is binary and takes one state when the transmission timing needs to be advanced and the other when it needs to be retarded. In this way a feedback loop causes the transmit timing to 'hunt' around the correct time. It will be appreciated that other means of timing control may be considered and that the above approach is merely exemplary, the key point being that control over timing is exerted in a practical manner.

The frequency of the direct digital synthesisers 8, 10 is controlled by a hopping sequence generator 12 which is arranged to generate a sequence of frequencies according to an algorithm which provides sequences orthogonal to the sequences used by other terminals also transmitting to the same base station. The synchronisation of the hopping sequence generator can best be achieved by arranging for it to be controlled by a timing signal generated from information contained in the signal transmitted from the base station to the terminal although other methods of synchronisation are not excluded.

If QPSK phase randomisation is applied then a further unit generating and inserting a sequence of random phases (0, π/2, π, 3 π/2) is added to the modulation chain.

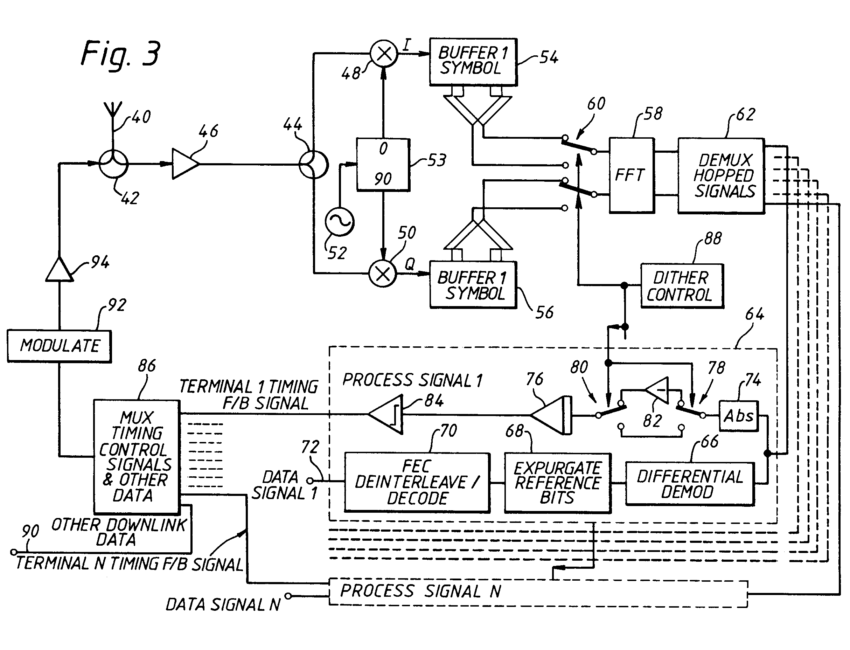

A block diagram for an example base station architecture is shown in Figure 3.

Referring to Figure 3, the receiver architecture comprises an antenna 40 connected to a diplexer 42, the output of which is passed to a splitter 44 via an amplifier 46. The outputs of the splitter 44 are applied to an input of a combiner circuit 48, 50, the circuit 48 is arranged to handle the inphase signals and the circuit 50 is arranged to handle the quadrature phase signals. The combiners are driven from a carrier frequency synthesiser 52 via a circuit 54. The output of each combiner circuit 48, 50 is connected to an input of a buffer circuit 54, 56 respectively. There is a buffer circuit provided for each symbol. The output of the buffer circuits are connected to a fast Fourier transform circuit 58 via a switch 60. The outputs from the fast Fourier transform circuits 58 are connected to a circuit 62, which demultiplexes the hopped signals. The demultiplexed signals are passed to a respective processor circuit 64 which comprises a differential demodulator 66 connected to an expurgate reference bits circuit 68, the output of which is connected to an FEC deinterleave/decoder circuit 70, which generates output data signals on a line 72. Each processor circuit 64, also includes an absolute value circuit 74, which receives the demultiplexed signals which are passed to an amplifier 76 via a pair of switches 78, 80. The switches 78, 80 in a first position connects inverter 82, and in a second position connects the output of the absolute value circuit 74 to an input of an amplifier 76. The output of the amplifier 76 is connected to a limiting circuit 84, the output of which is connected to a circuit 86,
which receives similar signals and other data from the other processor circuits. A dither control circuit 88 is connected to control the switches 60, 78, 80. The circuit 86 provides multiplex timing control signals and other data, and receives terminal timing signals on a line 90. The output of the circuit 86 is connected to a modulator 92 and is applied to the diplexer 42 via an amplifier 94.

The signal from the terminals is first down-converted to complex baseband in digital format (this may involve a number of frequency conversions and the final conversion may or may not be performed in digital format. Groups of samples covering a period of one symbol are accumulated into buffers 54, 56 on the I and Q channels (in the example implementation these can be viewed as shift registers). For each of these groups, a complex FFT is performed by circuit 58. Each of the outputs of the FFT circuit 58 corresponds either to a symbol from a terminal or noise and interference only if there is no terminal currently using that frequency. However, the mapping between the FFT outputs and the symbols will be scrambled in some fashion in accordance with the orthogonal frequency hopping sequences in operation at the various terminals. The demux hopped signals circuit 62 serves to descramble the mappings through knowledge of the state of the frequency hopping sequence generators in all of the active terminals and routes each symbol to the appropriate process signal unit 64. Each of these units applies differential demodulation (by multiplying each symbol by the complex conjugate of its predecessor). At this stage hard decisions may or may not be taken depending on the use of soft decisions in the FEC decoder circuit 70. Next, those bits which correspond to differentially demodulating across a frequency hop boundary are removed (since these effectively correspond to the reference bits). Note that these two operations together represent only one possible implementation. Multi-bit detection schemes are not excluded. Finally, the data is deinterleaved if necessary and FEC decoded by the circuit 70.

If QPSK phase randomisation is applied, then a further unit generating and inserting the same sequence of random phases (0, π/2, π, 3 π/2) as is generated in the terminal, is added prior to the differential demodulator.

The base station sub system must also provide the timing control signals for the terminals. One possible implementation of this based on the 'Tau Dither' approaches is illustrated in Figure 3. The buffer 1 symbol element 54, 56 is a shift register holding samples covering a period slightly longer than the period of a symbol. The outputs are formed into two groups of connections each covering exactly one symbol period but differing in the actual timing by a fraction of a symbol period. The switches determine which of these groups (early or late) are connected to the FFT circuit 50 for each symbol period. The dither control circuit 88 is simply a clock circuit which alternates between high and low on successive symbols, and controls the switches 60 connected to the FFT circuit 58 so that it receives alternately an early and a late symbol. For each of the signals, the process signal unit 64 takes the modulus of the symbols and either adds them to or subtracts them from an accumulated value. This accumulated value is thus related to the mean timing error. The output is hard limited and its state is periodically sampled and multiplexed along with timing signals from the other active process signals elements and the other signals for transmission to the terminals. The multiplexed signals are then modulated onto the transmission from the base station to a terminal. Note that the approach shown is only by way of example. The multiplexing and modulation operations may be performed jointly or in any order. For example, FDMA modulation would achieve multiplexing and modulation in one operation.

The timing signals generated as described above are suitable for the timing control circuitry already described for the terminal to close a feedback loop and thus maintain synchronisation to within a fraction of a bit.

It will be appreciated that other methods of timing error estimation are possible and fall within the scope of this invention. For example, the early, prompt, late, approach provides lower noise timing signals as well as arranging for the receiver to operate nearer to the optimum sample point. However, this would involve the performance of three FFT operations per symbol rather than one.

## Claims

1. A frequency hopped cellular mobile radio system comprising at least one base station and a plurality of terminals, each terminal being arranged to communicate with said base station over a radio medium, wherein the terminals are arranged to operate using orthogonal frequency division multiple access techniques, in which the terminals transmit orthogonally on a number of different frequencies, so that one or more data streams are multiplexed onto orthogonal frequencies.

2. A system as claimed in Claim 1, wherein the orthogonal frequencies have a uniform frequency spacing f_{c} and linear signalling is applied at the rate of 1/f_{c}.

3. A system as claimed in Claim 2, wherein the system is arranged to utilise synchronised orthogonal slow frequency hopping with orthogonal frequency division multiple access, so that each terminal alters its transmit frequency from one frequency to another, which in the case of an uplink cellular mobile radio system, fully orthogonal transmission is achieved.

4. A system as claimed in Claim 2 or Claim 3, wherein each mobile terminal includes means to affiliate that terminal to their nearest base station and means to control the power so that the minimum power is used to achieve adequate bit error rate performance.

5. A system as claimed in any preceding claim, wherein forward error correction coding means is provided to average the effects of poor signal conditions over the good signal conditions.

6. A system as claimed in Claim 5, wherein the forward error correction coding uses convolutional codes.

7. A system as claimed in Claim 5, wherein the forward error correction coding uses Reed Solomon codes.

8. A system as claimed in Claim 5, wherein each terminal includes an antenna via which radio communication is achieved to each base station, a downlink receiver connected to said antenna and demultiplexing means for demultiplexing an output from said downlink receiver, said demultiplexing means being arranged to advance or retard a clock generation means which is arranged to control the timing of transmitted symbols produced by forward error correction coding means with reference symbols inserted in the coded data stream, the output of which is passed to a pair of digital synthesisers, each arranged to be controlled by a hopping sequence generator, a first digital synthesiser being dedicated to inphase signals and the second digital synthesiser being dedicated to quadrature phase signals, and means for modulating the output from said digital synthesisers onto a carrier frequency for transmission to said antenna.

9. A system as claimed in any preceding claim, wherein each base station comprises an antenna for receiving/transmitting radio signals, means for deriving an inphase and quadrature phase signal stream from said received signal, means for buffering groups of samples of said inphase and quadrature phase signal steam, covering a period of one symbol for each inphase and quadrature channel, means for performing a fast Fourier transform on the buffered samples, means connected to the fast Fourier transform means, arranged to demultiplex the signals, and a plurality of signal processor means each arranged to handle a particular symbol to apply differential demodulation to each symbol and remove those bits which correspond to differentially demodulating across a frequency hop boundary.

10. A system as claimed in Claim 9, wherein each signal processor means includes a differential demodulator connected to means for expurgating reference bits, an output of which is connected to a forward error connection coding means.

11. A system as claimed in Claim 10, wherein each base station is provided with means for providing timing control signals for the mobile terminals, wherein said means includes a Tau Dither control means which is used to control switching means connected between said buffer means and said fast Fourier transform means and operated to determine which output from said buffer means are connected to the fast Fourier transform means, and each signal processing means is arranged to operate upon a modulus of said symbols and either adds or subtracts said modulus from an accumulated value, to provide an output signal which is subjected to a hard limiting process and applied to multiplexing means arranged to multiplex said output signal with output signals from other signal processing means to generate a signal for transmission to the mobile terminals.
